# EUROPEAN PATENT SPECIFICATION

(11) **EP 3 805 107 B1**
(45) Date of publication and mention of the grant of the patent: **22.01.2025**
(21) Application number: 19315120.6
(22) Date of filing: 08.10.2019
(51) Int. Cl.: B64D 27/02, B64D 27/33

(54) **HYBRID PROPULSION SYSTEM FOR AIRCRAFT, METHOD OF OPERATING A HYBRID PROPULSION SYSTEM, AND A HYBRID AIRCRAFT**
HYBRIDANTRIEBSSYSTEM FÜR FLUGZEUGE, VERFAHREN ZUM BETRIEB EINES HYBRIDANTRIEBSSYSTEMS UND HYBRIDFLUGZEUG
SYSTÈME DE PROPULSION HYBRIDE POUR AÉRONEFS, PROCÉDÉ DE FONCTIONNEMENT D'UN SYSTÈME DE PROPULSION HYBRIDE ET AÉRONEF HYBRIDE

(43) Date of publication of application: 14.04.2021
(73) Proprietor: Airbus SAS, 31700 Blagnac (FR); AIRBUS HELICOPTERS, 13725 Marignane Cedex (FR)
(72) Inventor: Mariotto, Damien, 82024 Taufkirchen (DE); Echavarria, Ignacio, 82024 Taufkirchen (DE)
(74) Representative: KASTEL Patentanwälte PartG mbB

(56) References cited:
- EP-A1- 3 241 753
- EP-A1- 3 335 995
- DE-A1- 102014 224 637
- DE-A1- 102015 215 130

## Description

The invention relates to a hybrid propulsion system for aircrafts, a method of operating a hybrid propulsion system, and a hybrid aircraft.

Aviation is one of the fastest-growing sources of greenhouse effect and gas emissions. However, environmental footprint commitments have to be met. Emissions, like CO2, NOx, SOx, other pollutants (e.g. PMx) and noise need to be reduced.

Thus, the thermal engine cycle based on hydrocarbon fuels needs to be replaced soon to reduce this problem. For regional travel, principal big actor of emission, a switch from conventional gas turbine engine to hybrid and/or electric aircraft has been identified as a growing market with a high number of aeroplanes in the next years and decades.

However, while electric propulsion has advanced very rapidly, battery technology hasn't. The main issue is that 80% of the aviation industry's emissions come from passenger flights longer than 1500 km - a distance no electric airliner could yet fly with current battery technology.

An alternative solution is to use hydrogen fuel, which makes no CO2 emission if hydrogen is created in CO2 neutral manner.

EP 2 712 013 B1 discloses a fuel cell system for an aircraft and a method for operating the fuel cell system in the aircraft. The fuel cell system comprises fuel cell units coupled to a hydrogen tank.

EP 0 780 631 B1 discloses a method for the combustion of hydrogen in a burner inside a combustion chamber of a gas turbine, where hydrogen and air are injected into the burner.

DE 10 2015 215130 A1 discloses an aircraft propulsion system with a hydrogen driven turbine and a fuel cell.

It is the object of the invention to reduce the environmental footprint of aircrafts by reducing their emissions.

The object is achieved by a hybrid propulsion system for aircraft, comprising at least a fuel cell unit for providing power to drive an aircraft by using hydrogen in a redox reaction, at least a gas turbine for providing power to drive the aircraft by burning hydrogen, a hydrogen source for providing the hydrogen to the fuel cell unit and/or to the gas turbine, and at least an electric propulsion unit for driving the aircraft, the electric propulsion unit comprising a first electric machine connected to a first propeller, the first electric machine being electrically powered by the fuel cell unit and mechanically powered by the gas turbine in at least two different propulsion modes, and a control unit to control the power supply to the electric propulsion unit, wherein the control unit is configured to apply a first propulsion mode for a first flight phase in which the electric propulsion unit is essentially or only electrically powered by the fuel cell unit, and to apply a second propulsion mode for a second flight phase in which the electric propulsion unit is essentially or only mechanically powered by the gas turbine.

Emissions like CO2, NOx, SOx, other pollutants (e.g. PMx) and noise are reduced. Moreover, 0% emissions can be achieved e.g. in cities and airports, i.e. no pollution, no CO2, NOx, SOx, other pollutants are emitted and noise is reduced due to gas turbine inoperative. In addition, 0% CO2 emissions can be achieved e.g. during cruise where only a residual small amount of NOx is emitted, but no SOx and no other pollutants. Thus, the pollution on the overall flying phase is reduced.

The invention creates an innovative Zero-C dual H2 aircraft concept which combines both, H2 Burn and fuel cell propulsion in different flight phases and thus reduces harmful emissions. H2 Burn uses hydrogen as a fuel for e.g. a conventional gas turbine engine, and fuel cell propulsion uses the hydrogen for a redox reaction on an anode-cathode cell.

The control unit may be configured to apply the first propulsion mode in particular in one or more of the flight phases taxiing, take-off, first part of climbing, second part of descent and landing. In this way, 0% emissions are achieved in these phases, and there is no pollution in cities and airports, and no CO2, NOx, SOx, other pollutants are emitted and noise is reduced there.

The control unit may be configured to apply the second propulsion mode in particular in one or more of the flight phases second part of climbing, cruise and first part of descent. In this way, 0% CO2 emissions and a highly reduced amount of NOx are achieved during cruise and no SOx and no other pollutants are emitted in these phases.

According to a preferred embodiment, the electric propulsion unit may comprise a second electric machine for driving a second propeller, wherein the fuel cell unit is adapted to provide the electrical power to the first electric machine and/or to the second electric machine, and wherein the gas turbine is adapted to provide the mechanical power at least to the first electric machine and to the first propeller via a common shaft.

Thus, the hybrid propulsion system is redundant. It enables also to still operate the aircraft in a safe manner in case of failure.

The first electric machine may be adapted to convert the mechanical energy provided by the gas turbine into electrical energy, and to provide that electrical energy e.g. to the second electric machine to drive its assigned propeller.

The control unit may comprise a failure control automatism for automatically changing from one to the other propulsion mode in case of a failure of an element of the propulsion chain, in case of a failure of the fuel cell unit and/or in case of a failure of an electric connection for delivering electrical energy to an electric machine of the electric propulsion unit, and/or in case of a failure of an electric machine of the electric propulsion unit, and/or in case of a failure of a gas turbine. Depending on the type of a failure and the currently activated propulsion mode, the control unit may activate a flow of hydrogen to the fuel cell unit and/or in addition to the gas turbine, and/or a flow of electrical power from the fuel cell unit to one or more of the electric machines for driving propellers, and/or in addition a flow of mechanical power from the gas turbine to both electric machines or to only one of the electric machines.

In the first propulsion mode, preferably only the fuel cell unit may be powered by the hydrogen. In the second propulsion mode, preferably only the gas turbine may be powered by the hydrogen.

According to an aspect of the invention, a method of operating a hybrid propulsion system of an aircraft is provided, the hybrid propulsion system comprising an electric propulsion unit which comprises a first electric machine connected to a first propeller and a gas turbine, wherein the method comprises the steps of providing hydrogen to a fuel cell unit and/or to a gas turbine, providing power to drive the electric propulsion unit of the aircraft in a first propulsion mode by using the hydrogen for a redox reaction in the fuel cell unit, providing power to mechanically drive the electric propulsion unit of the aircraft in a second propulsion mode by burning the hydrogen in the gas turbine, wherein in a first flight phase the first propulsion mode is essentially or only used, and in a second flight phase the second propulsion mode is essentially or only used.

The first propulsion mode may be applied in particular in one or more of the flight phases taxiing, take-off, first part of climbing, second part of descent and landing.

The second propulsion mode may be applied in particular in one or more of the flight phases second part of climbing, cruise and first part of descent.

For example, in the first propulsion mode only the fuel cell unit may be powered by the hydrogen.

For example, in the second propulsion mode only the gas turbine may be powered by the hydrogen.

Depending on a type of a failure and the currently activated propulsion mode, a flow of hydrogen to the fuel cell unit and/or at the same time to the gas turbine may be activated, and/or a flow of electrical power from the fuel cell unit and/or in addition a flow of mechanical power from the gas turbine to the first electric machine and/or to a second electric machine of the electric propulsion unit connected to a second propeller may be activated.

According to a preferred embodiment, in the first propulsion mode the fuel cell unit may provide electrical power to the first electric machine for driving the first propeller and/or to the second electric machine of the electric propulsion unit for driving the second propeller, and in the second propulsion mode the gas turbine may provide mechanical power at least to the first electric machine for driving the first propeller.

In the second propulsion mode the gas turbine may provide mechanical power to a first electric machine which may transform the mechanical power to provide electrical power to the second electric machine for driving another propeller.

In the second propulsion mode, electrical energy may be produced by the first electric machine which converts mechanical energy provided by the gas turbine and which may provide the electrical energy to the second electric machine for driving another propeller.

According to a further preferred embodiment, the method comprises a failure operation in which the current propulsion mode is replaced by the other propulsion mode in case of a failure of an element of the propulsion chain, in case of a failure of the fuel cell unit, and/or in case of a failure of an electric connection delivering electrical energy to the electric machine for driving the propeller, and/or in case of a failure of the electric machine of the electric propulsion unit for driving the aircraft, and/or in case of a failure of a gas turbine.

Advantageously, a hybrid propulsion system according to the invention can be used in the method according to the invention.

According to another aspect, the invention provides a hybrid aircraft which comprises a hybrid propulsion system according to the invention.

Characteristics and advantages described in relation to the hybrid propulsion system are also related to the method of operating a hybrid propulsion system and vice versa.

In the following, exemplary embodiments showing further advantages and characteristics are described in detail with reference to the figures, in which:
- Fig. 1: shows a schematic view of a hybrid propulsion system for an aircraft according to a first embodiment of the invention;
- Fig. 2: shows a schematic view of a conventional gas turbine used in the hybrid propulsion system of figure 1;
- Figs. 3 a,b: show a schematic view of a conventional fuel cell unit used in the hybrid propulsion system of figure 1;
- Fig. 4: shows a schematic diagram of different flight phases of an aircraft with different propulsion modes according to a preferred embodiment of the invention;
- Fig. 5: shows a schematic view of a hybrid propulsion system for an aircraft according to a second embodiment of the invention;
- Fig. 6: shows a schematic part view of an aircraft equipped with the hybrid propulsion system according to figure 5;
- Fig. 7: shows a schematic diagram of different flight phases and the different propulsion modes assigned thereto;
- Figs. 8 a-c: show schematic views of an aircraft in which the hybrid propulsion system operates in the different propulsion modes in accordance with the different flight phases as shown in figure 7;
- Figs. 9 a-c: show schematic views of an aircraft in which the hybrid propulsion system operates in different failure modes during take-off;
- Figs. 10 a-c: show schematic views of an aircraft in which the hybrid propulsion system operates in different failure modes during cruise; and
- Fig. 11: shows a schematic view of an aircraft equipped with a hybrid propulsion system according to the first embodiment of the invention.

In the figures, similar or identical elements and features are designated by the same reference numbers.

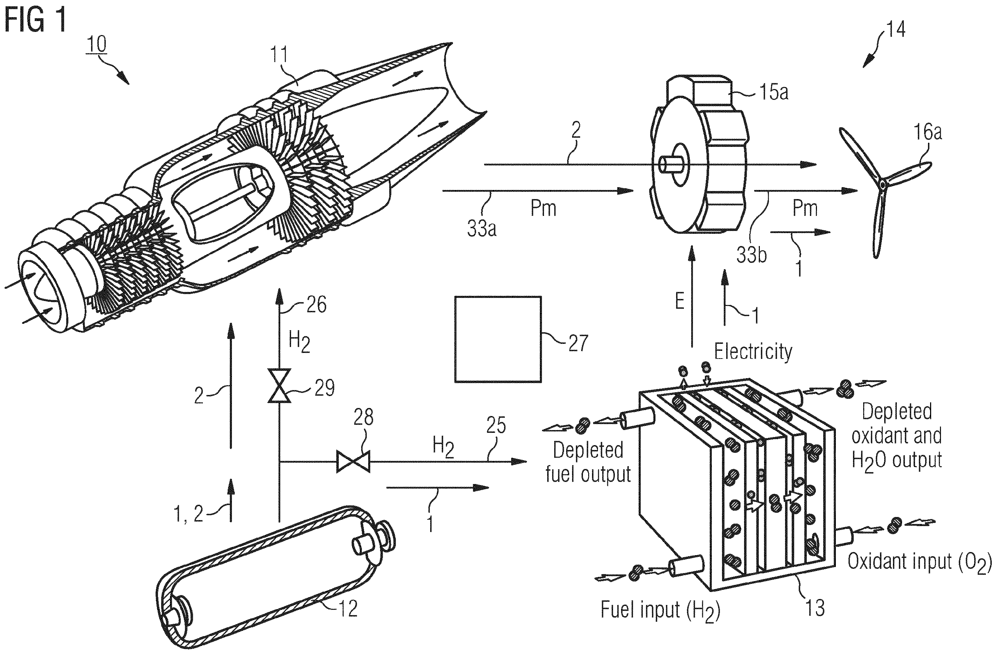

**Figure 1** shows a hybrid propulsion system 10 according to a first embodiment of the invention. The propulsion system 10 comprises a gas turbine 11 which is connected to a fuel tank 12 which contains hydrogen, whereby the hydrogen can be supplied via duct 26 to the gas turbine 11. The gas turbine 11 is e.g. a conventional gas turbine for burning the hydrogen. In addition, a fuel cell unit 13 is connected to the fuel tank 12 via duct 25 in order to be supplied with hydrogen.

An electric propulsion unit 14 is mechanically connected to the gas turbine 11 and electrically connected to the fuel cell unit 13 whereby both can provide energy (mechanical and electrical) to the electric propulsion unit 14, wherein the electric propulsion unit 14 is essentially powered by the fuel cell unit 13 in a first propulsion mode, whereas in a second propulsion mode the electric propulsion unit 14 is essentially powered by the gas turbine 11.

A power control unit 27 controls the hydrogen flow from fuel tank 12 to gas turbine 11 and/or to fuel cell unit 13as well as the flow of electrical power E and mechanical power Pm to the electric propulsion unit 14.

The electric propulsion unit 14 comprises at least an electric machine 15a which is connected to a propeller 16a and to the gas turbine 11 on a common shaft. The electric machine 15a receives in the first propulsion mode mechanical power Pm from the gas turbine 11 via a shaft 33a in order to drive the propeller 16a via a shaft 33b.

In a second propulsion mode the electric machine 15a receives electrical power E from the fuel cell unit 13 via an electrical connection or electric line 30 and provides it as mechanical power Pm to propeller 16a. Thus, redundancy is given. The hybrid propulsion system 10 realises a Zero-C dual H2 system concept.

It is also possible that the electric machine 15a receives mechanical power Pm from the gas turbine 11 and in addition electrical power E from the fuel cell unit 13.

The electric machine 15a is fully integrated and comprises an inverter and controller with inherent safety features to control switching between the different operational modes.

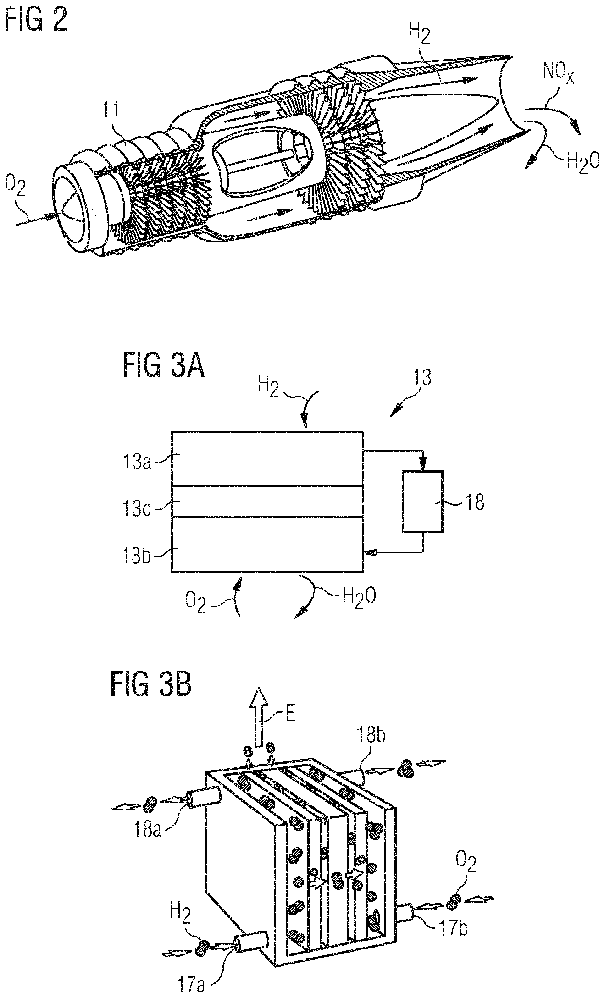

**Figure 2** shows the gas turbine 11 as an enlarged view, which is known in the state of the art. It receives hydrogen from the fuel tank 12, which is indicated in the figure by arrow H₂. On its air inlet at its front side the gas turbine 11 receives oxygen from the ambient air, which is indicated in the figure by arrow 0₂. During operation, the gas turbine 11 burns the hydrogen, whereby energy is set free and water and NOₓ is produced. The energy is transformed in mechanical power and provided to the propeller 16.

The gas turbine 11 produces 0% CO2 and works with high efficiency while it produces high power.

In **figures 3a and 3b** the fuel cell or fuel cell unit 13 which is part of the Hybrid propulsion system 10, is shown in an enlarged view. It is known in the state of the art and comprises an anode 13a, a cathode 13b and an electrolyte 13c which is disposed between the anode 13a and the cathode 13b (see fig. 3a). During operation, the fuel cell 13 receives hydrogen at a fuel input opening 17a on its anode side, as indicated by arrow H2, and it receives oxygen at an oxidant input opening 17b on its cathode side, as indicated by arrow 02 (see fig. 3b). As a redox reaction on the anode-cathode cell, and electric power is produced which can be supplied to an electric load 18 (see fig. 3a).

The fuel cell 13 produces 0% CO2 and works with relatively low efficiency and high power. A relatively big heat exchanger is foreseen.

Depleted fuel is output at a depleted fuel output opening 18a at the anode side of the fuel cell 13. Depleted oxidant and H₂O is output at a depleted oxidant and H₂O output opening 18b at the cathode side of fuel cell 13. By the redox reaction electricity e⁻ is output from the fuel cell 13 as indicated by arrow E, and provided to the electric machine 15a which forms an electric motor and drives the propeller 16 (see figure 1).

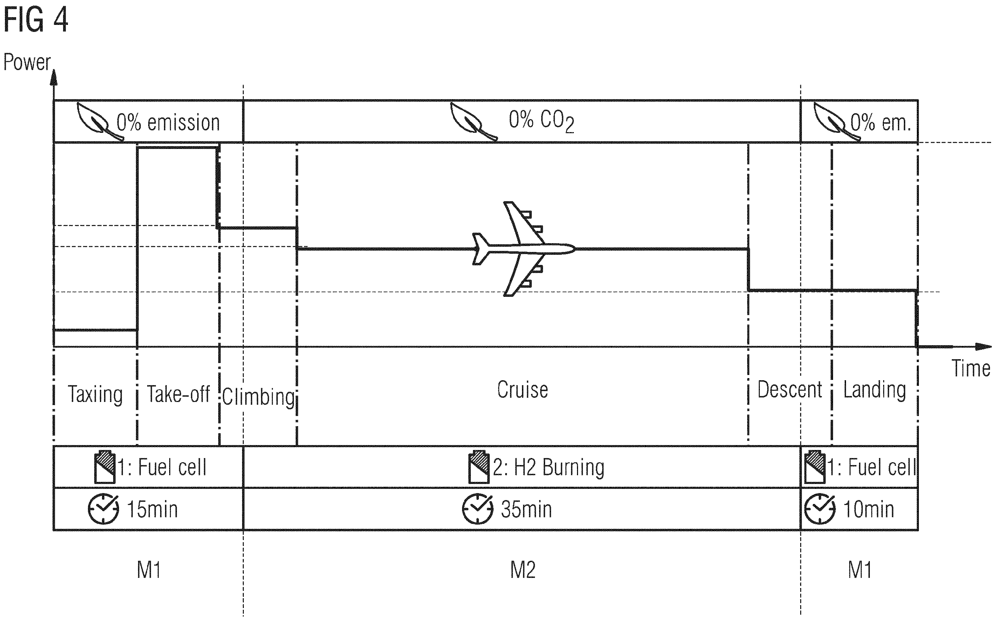

**Figure 4** shows the configuration and the operation of the hybrid propulsion system 10 depending on different flight phases of an aircraft 100.

During flight phases taxiing, take-off and first part of climbing the hybrid propulsion system 10 is mainly or exclusively operated in a first mode M1, in which the power for taxiing, take-off and first part of climbing is solely or at least mainly generated by the fuel cell unit 13. During taxiing a relatively low power is needed, whereas during take-off the power reaches a maximum. In this example, the phases taxiing and take-off have a duration of approximately 15 minutes.

During the flight phases second part of climbing, cruise and first part of descent the hybrid propulsion system 10 is mainly or exclusively operated in a second mode M2, in which the power for second part of climbing, cruise and first part of descent is solely or at least mainly generated by H2 burning in the gas turbine 11. During climbing, the needed power is essentially lower than during take-off. During cruise the needed power is reduced, and during descent the power is further reduced. In this example, the phases second part of climbing, cruise and first part of descent have a duration of approximately 35 minutes.

During the second part of descent and landing phase the hybrid propulsion system 10 is again operated in the first mode M1 were the power is solely or at least mainly generated by the fuel cell unit 13. The power level is lower than during cruise. In this example, the second part of descent and landing phase as a duration of approximately 10 minutes.

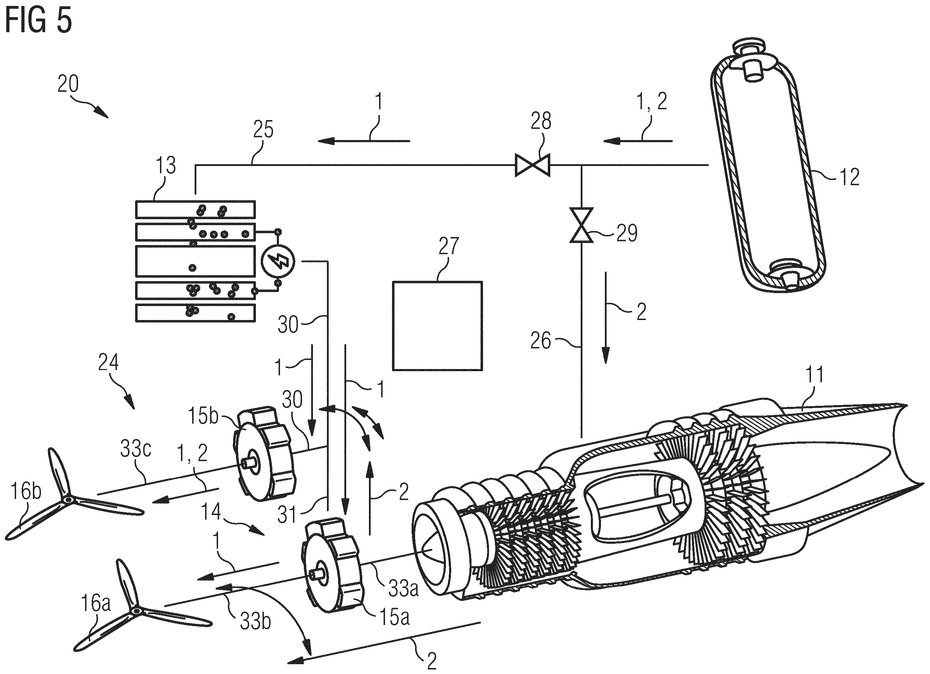

**Figure 5** shows a hybrid propulsion system 20 according to a second embodiment of the invention. As in the first embodiment shown in figure 1, the propulsion system 20 comprises gas turbine 11, fuel tank 12, fuel cell unit 13 and an electric propulsion unit 24. Gas turbine 11, fuel tank 12 and fuel cell unit 13 are described above in detail with reference to figures 1 to 3.

In this embodiment the electric propulsion unit 24 comprises in addition to the first electric machine 15a connected to first propeller 16a and to the gas turbine 11, a second electric machine 15b connected to a second propeller 16b. In addition to the above description with reference to figures 1 to 3, the first electric machine is also capable to convert the mechanical energy provided by the gas turbine 11 into electrical energy, and to provide that electrical energy to the second electric machine 15b to drive the second propeller 16b. The second electric machine 15b and the second propeller 16b have the same characteristics as the first electric machine 15a and the first propeller 16a, which are described above in detail with reference to figures 1 to 3.

The fuel tank 12 containing hydrogen is connected with the fuel cell unit 13 and the gas turbine 11 by ducts 25, 26. The fuel cell unit 13 is connected electrically to the electric machines 15a, 15b of the electric propulsion unit 24 by electric lines 30, 31.Power control unit 27 controls valves 28, 29 arranged in the ducts 25, 26 respectively to control the H2 flow to the fuel cell unit 13 and to the gas turbine 11 depending on the operational phase or flight phase of the aircraft 100 as well as the electric and mechanical power transmission through the electric lines 30, 31 and shafts 33a, 33b depending on the operational phase or flight phase of the aircraft 100. The power control unit 27 thus provides an H2, electric and mechanical energy management within the hybrid propulsion system.

A method of operating the hybrid propulsion system is shown in the following with reference to **figures 1****,** **5** **and** **6****,** where different flow paths are described.

Energy flow path 1 is applied during taxiing, take-off, first part of climbing, second part of descent and landing phase of aircraft 100. H2 flows from fuel tank 12 through ducts 25 to fuel cell 13. Electric energy flows from the fuel cell 13 through electric lines 30, 31 to the first and second electric machine 15a, 15b. Mechanical power Pm is transmitted from electric machines 15a, 15b through shafts 33b, 33c to propellers 16a, 16b. This describes the first propulsion mode M1 which is applied by the power control unit 27 during the period of these flight phases.

In propulsion mode M1 indicated by first path 1, the H2 powers the fuel cell 13 only and by consequence both electric machines 15a, 15b. The gas turbine 11 is not powered by H2. Being controlled by the power control unit 27, the valve 28 which connects the H2 tank 12 with the fuel cell unit 13 is in an open state, whereas the valve 29 which connects the H2 tank 12 with the gas turbine 11 is in closed state.

By the redox reaction in fuel cell unit 13, electric energy is output from the fuel cell 13 and delivered to the electric machines 15a, 15b. There, the electric energy is converted into mechanical power Pm and transmitted to propellers 16a, 16b.

When the second part of the climbing phase begins, energy flow path 2 is activated by the power control unit and will automatically apply the second propulsion mode M2.

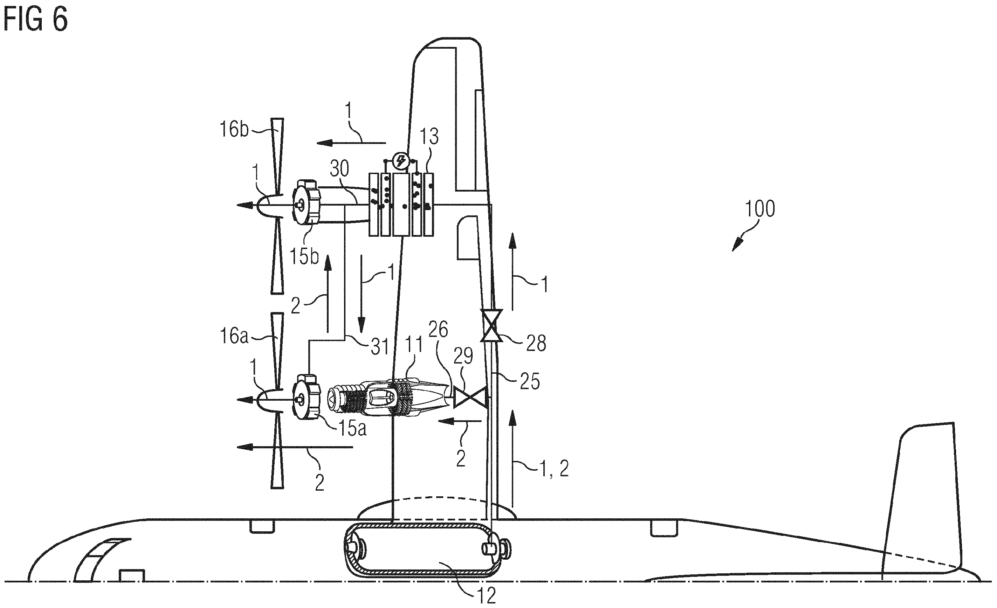

In this mode, the H2 will power the gas turbine 11 only and by consequence the associated propeller 16a via shaft 33a, 33b through the shaft of the first electric machine 15a. In addition **for** **Figure 5** **and** **6****,** the gas turbine 11 provides energy to the second electric machine 15b via the first electric machine 15a, which serves as a generator, and via electric lines 31, 30 electrically connecting first and second electric machines 15a, 15b. The second electric machine 15b serves as a motor for driving second propeller 16b.

The fuel cell unit 13 will not be powered by H2, i.e. it will not supply power to the electric propulsion unit 24 in mode M2.

To achieve this, valve 29 is controlled by the power control unit 27 to be in an open state and thus allows an H2 flow from the H2 tank 12 to the gas turbine 11 through duct 26, whereas valve 28 is controlled to be in a closed state whereby no H2 is delivered to the fuel cell unit 13.

The propulsion mode M2 is still applied in the first part of the descent phase in this example of operating the hybrid propulsion system 20. When it comes to the second part of the descent phase, the system will commute back to propulsion mode M1 in which only the fuel cell unit 13 is powered and flow path 1 is activated.

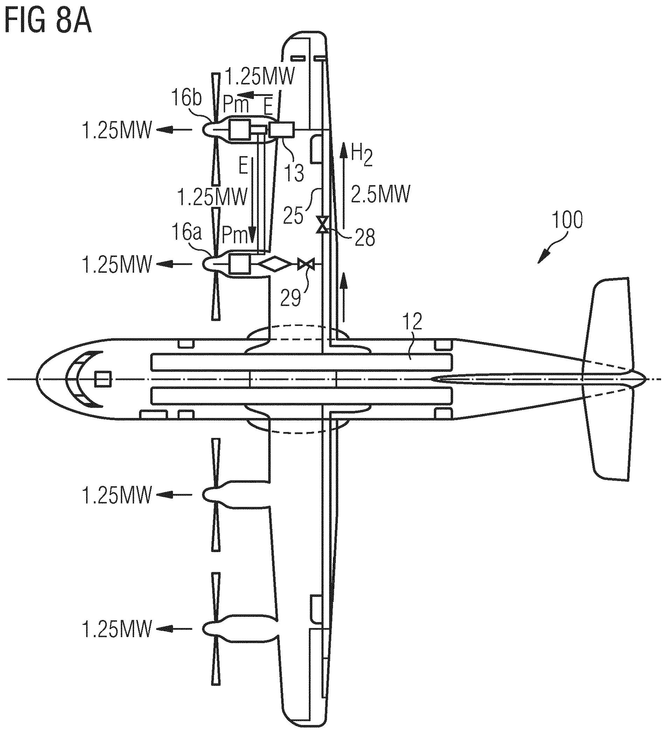

The configuration and the operation of the hybrid propulsion system 20 depending on the flight phases is shown in the following with reference to Figs. 4 and 8a to 8c according to the second embodiment.

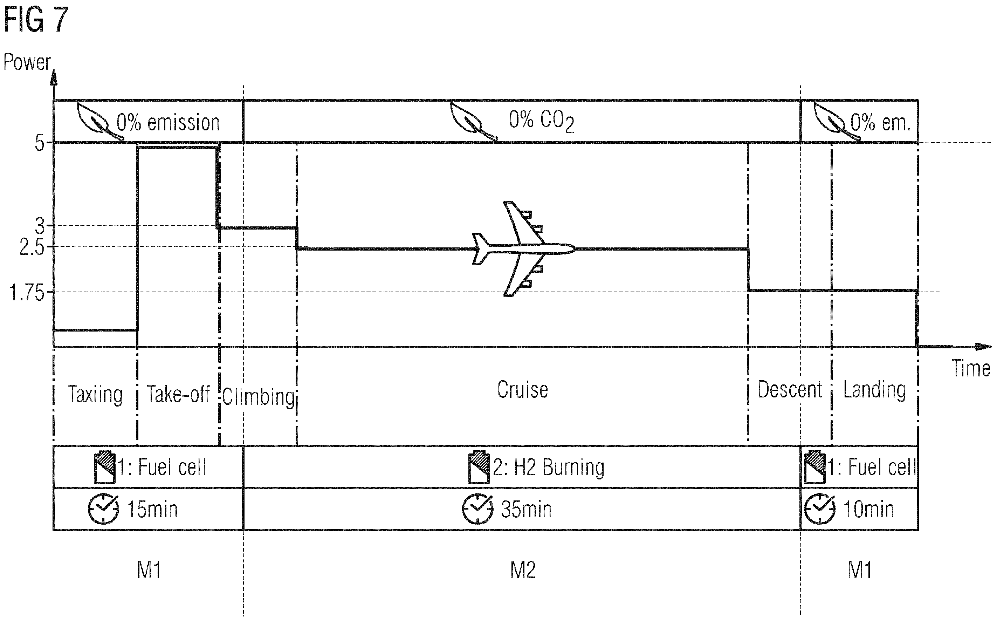

**Figure 7** shows the different propulsion modes M1 and M2 depending on the flight phases, and figures 8a to 8c show the configuration of the hybrid propulsion system 20 in the different phases according to the second embodiment.

Figure 7 is similar to figure 4 which is described above, but further shows the propulsion power in MW (megawatts).

**Figure 8a** shows the configuration of the propulsion system 20 during propulsion mode M1 applied during taxiing, take-off and first part of climbing according to the second embodiment. The valve 28 is in an open state and valve 29 is closed whereby H2 flows through duct 25 to the fuel cell unit 13 only. In this example, 2.5 MW are provided on each side of the aircraft 100 in the e.g. take-off phase. The fuel cell unit 13 powered by the H2 supply delivers electrical power E to both electric machines or motors, which then provide mechanical power Pm in equal shares of 1.25 MW to the propellers 16a, 16b. Thus, the total power on both sides of the aircraft 100 is 5 MW in this example.

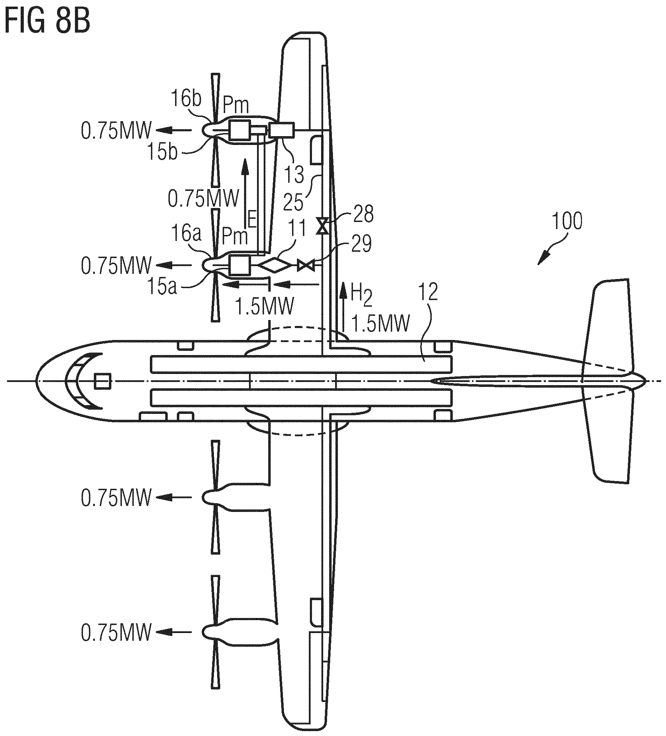

**Figure 8b** shows the configuration of the propulsion system 20 during propulsion mode M2 applied during second part of climbing, cruise and first part of descent. Here, valve 29 is in an open state whereas valve 28 is closed whereby H2 flows to the gas turbine 11 only. In this example, 1.5 MW are provided on each side of the aircraft 100 in e.g. the climbing phase.

The gas turbine 11 powered by the H2 supply delivers mechanical power PM to first electric machine 15a which acts as a generator to generate a flow of electric power E to second electric machine 15b, while it also supplies mechanical power Pm to drive its associated propeller 16a. The power is delivered to both propellers 16a, 16b in equal shares of 0.75 MW. Thus, the total power on both sides of the aircraft 100 is 3 MW in this example.

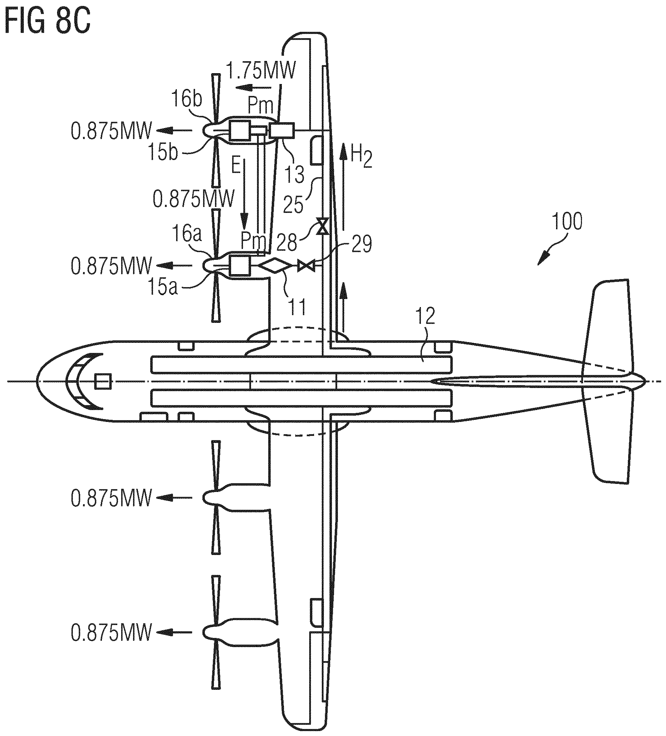

**Figure 8c** shows the configuration of the propulsion system 20 during propulsion mode M1 again, to which the system commutes at the beginning of the second part of the descent phase. The configuration of the propulsion system 20 including the H2 flow and electric and mechanic power flows is similar to the configuration described above with reference to Figure 8a, however it generates less power.

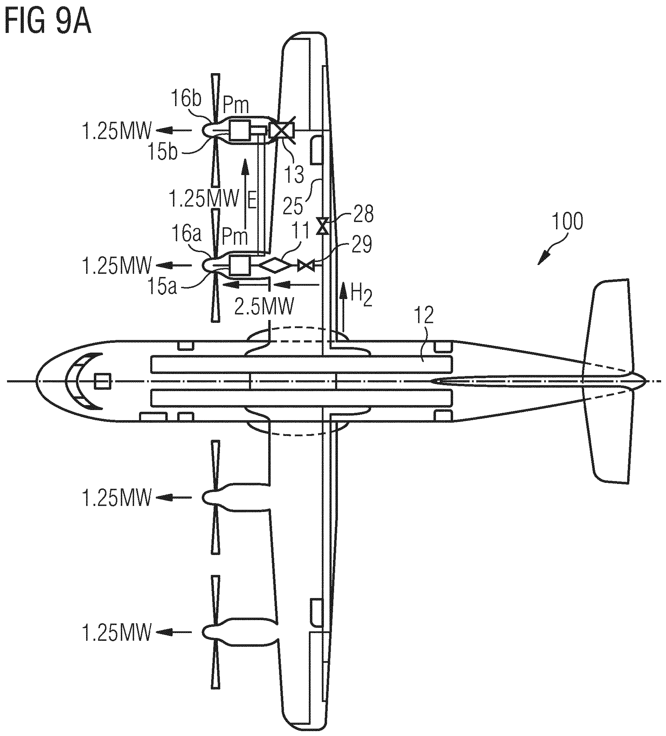

**Figures 9a to 9c** show different failure mode operations of the hybrid propulsion system 20 during e.g. take-off, which are described in the following. As shown below, the propulsion system 20 is redundant and enables still to operate in a safe manner the aircraft 100 in case of a failure.

**Figure 9a** shows the configuration of the hybrid propulsion system 20 during a fuel cell unit 13 failure in e.g. the take-off phase, in which the fuel cell 13 is inoperative or shows a malfunction. The system switches automatically to the H2 burning configuration. In this configuration the second propulsion mode M2 is applied. H2 is supplied from fuel tank 12 to the gas turbine 11 only. Valve 28 is closed and valve 29 is open.

The gas turbine 11 provides 2.5 MW to the first electric machine 15a, which forwards half of the power as electrical power E to the second electric machine 15b, and half of the power as mechanical power Pm to its associated propeller 16a. Thus, both propellers 16a, 16b on one side of the aircraft 100 are operative and each of them provides 1.25 MW. In total, the propulsion energy on both sides of the aircraft 100 amounts to 5 MW.

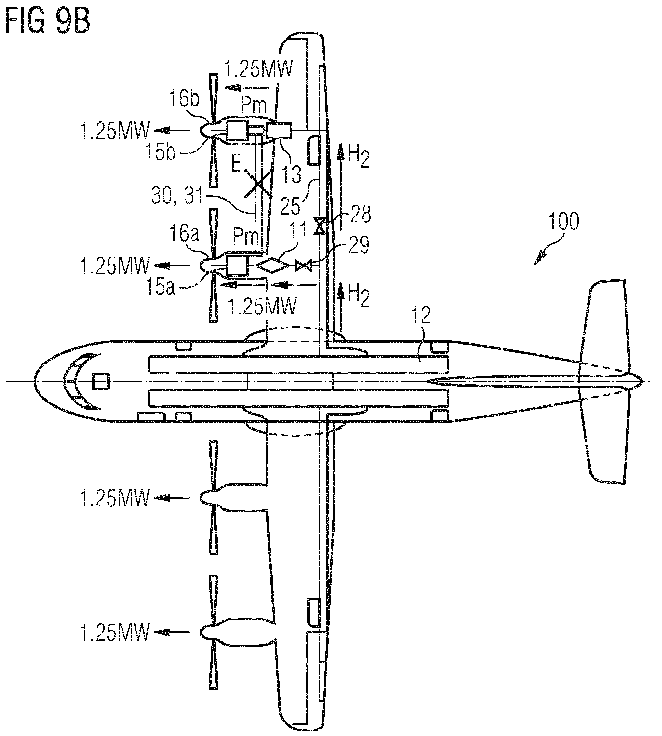

**Figure 9b** shows the configuration of the hybrid propulsion system 20 during an electric connection failure in e.g. the take-off phase. In this case the electric connection provided by connection lines 30, 31 is interrupted. The system 20 activates automatically the H2 burning configuration similar to second propulsion mode M2. The gas turbine 11 supplies 1.25 MW. In addition, the fuel cell 13 provides 1.25 MW.

H2 is supplied from fuel tank 12 to the fuel cell unit 13 and in addition to the gas turbine 11. Both valves 28, 29 are open and both propellers 16a, 16b on one side of the aircraft 100 are operative and each of them provides 1.25 MW. In total, the propulsion energy on both sides of the aircraft 100 amounts to 5 MW.

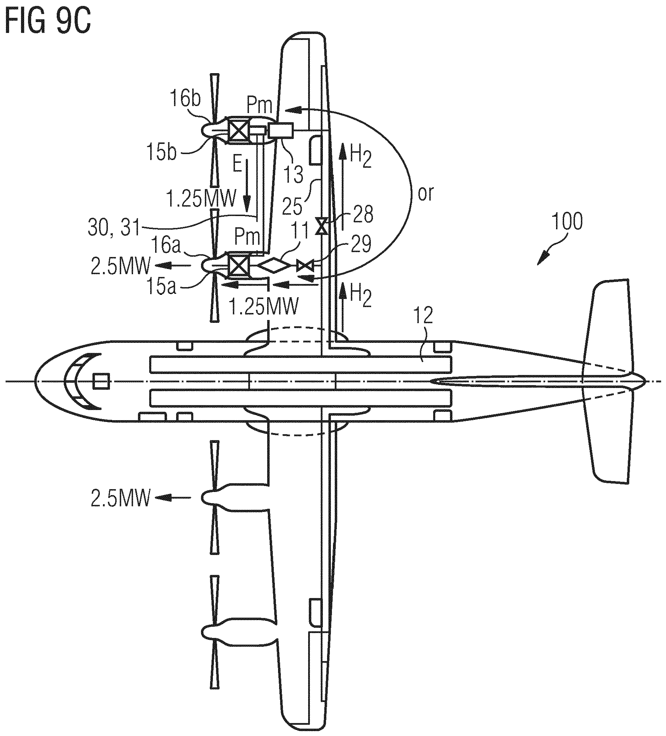

**Figure 9c** shows the configuration of the hybrid propulsion system 20 during an electric machine failure in e.g. the take-off phase.

In case that the external second electric machine 15b becomes inoperative, the system 20 automatically activates the H2 burning automatic configuration, similar to the second operational mode M2. The gas turbine 11 provides 1.25 MW. In addition, the fuel cell 13 provides 1.25 MW.

H2 is supplied from fuel tank 12 to the fuel cell unit 13 and in addition to the gas turbine 11. Both valves 28, 29 are open. Gas turbine 11 supplies power to its associated first electric machine 15a, and in addition fuel cell unit 13 supplies via electric lines 30, 31 electrical power E to the first electric machine 15a. Thus, the first propeller 16a is powered with 2.5 MW while the external second propeller 16b is not operative.

In case that the internal first electric machine 15a is inoperative, the system 20 automatically activates the H2 burning automatic configuration, similar to the second operational mode M2. In addition, the fuel cell 13 further generates power.

H2 is supplied from fuel tank 12 to the fuel cell unit 13 which supplies 1.25 MW in this example, and in addition to the gas turbine 11 which also supplies 1.25 MW in this example. Both valves 28, 29 are open and both propellers 16a, 16b are operative.

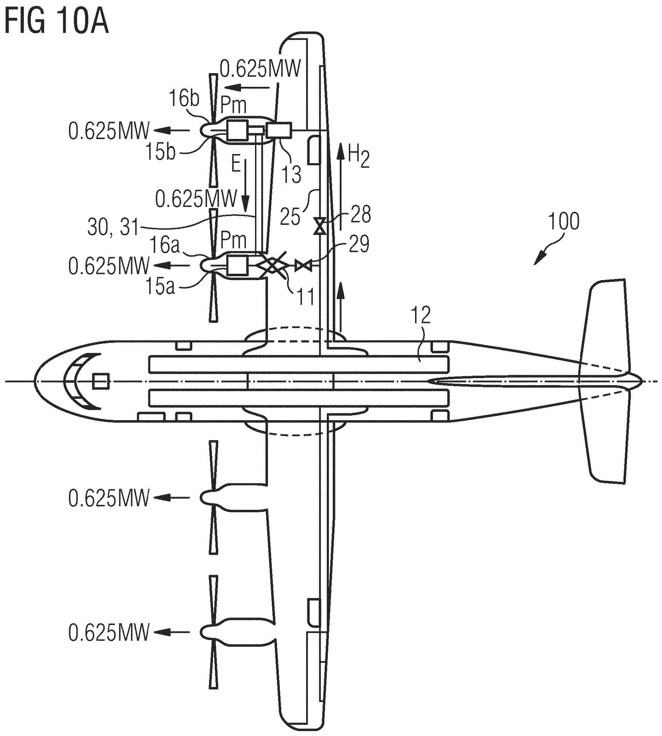

**Figures 10a to 10c** show different failure mode operations of the hybrid propulsion system 20 during e.g. cruise, which are described in the following.

**Figure 10a** shows the configuration of the hybrid propulsion system 20 during a turbine failure in the e.g. cruising phase, in which the turbine 11 is inoperative or shows a malfunction. The system switches automatically to the fuel cell automatic configuration. In this configuration the first propulsion mode M1 is applied. H2 is supplied from fuel tank 12 to the fuel cell unit 13 only. Valve 29 is closed and valve 28 is open.

The fuel cell 13 provides 1.25 MW, which is distributed by electric connections 30, 31 to both electric machines 15a, 15b whereby both propellers 16a, 16b are operative and each of them provide 0.625MW. In total, the propulsion energy on both sides of the aircraft 100 amounts to 2.5 MW.

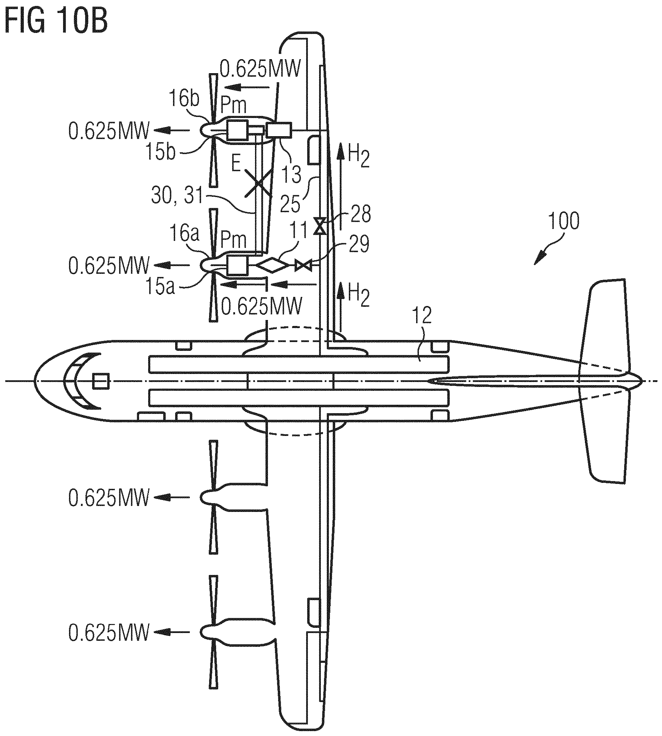

**Figure 10b** shows the configuration of the hybrid propulsion system 20 during an electric connection failure during e.g. cruise. In this case the electric connection provided by connection lines 30, 31 is interrupted. The system 20 activates automatically the fuel cell configuration which is similar to propulsion mode M1. In addition, the gas turbine 11 generates power.

H2 is supplied from fuel tank 12 to fuel cell unit 13, which provides 0.625 MW in this example, and in addition to the gas turbine 11 which also provides 0.625 MW. Both valves 28, 29 are open. Both propellers 16a, 16b on each side of the aircraft 100 are operative and each of them provides 0.625 MW.

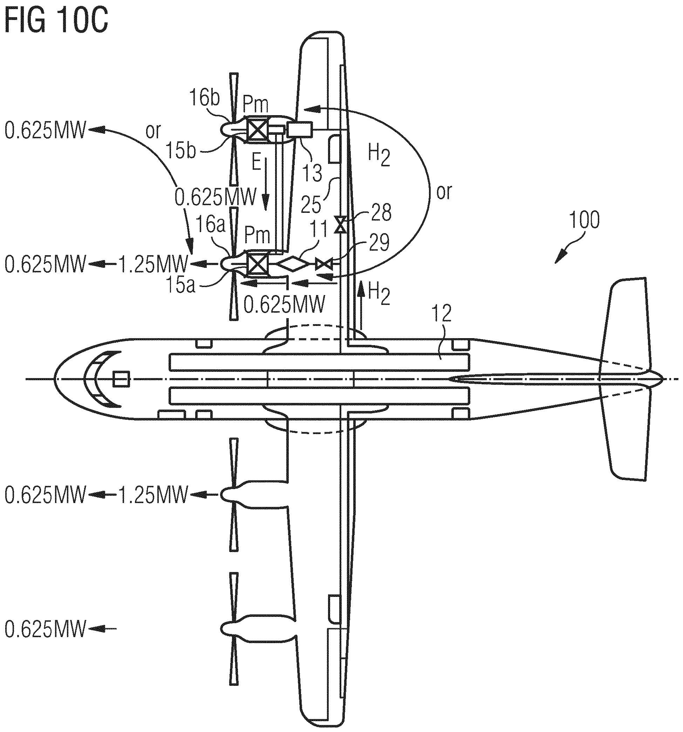

**Figure 10c** shows the configuration of the hybrid propulsion system 20 during an electric machine failure during e.g. cruise. In case that the external electric machine 15b is inoperative, the system 20 automatically activates the fuel cell automatic configuration similar to the first operational mode M1. The fuel cell provides power, in this example 0.625 MW. In addition, the gas turbine 11 provides power, in this example also 0.625 MW.

H2 is supplied from fuel tank 12 to the fuel cell unit 13 and in addition to the gas turbine 11. Both valves 28, 29 are open. Fuel cell unit 13 supplies electrical power E to the internal first propeller 16a which also receives the mechanical power Pm from gas turbine 11. Thus, the internal first propeller 16a is operative while the external second propeller 16b is not operative.

In case that the internal first electric machine 15a is inoperative, the system 20 automatically activates the fuel cell automatic configuration similar to the first operational mode M1. In addition, the gas turbine 12 provides power.

H2 is supplied from fuel tank 12 to the gas turbine 11 which supplies 0.625 MW in this example, and in addition to the fuel cell unit 13 which also supplies 0.625 MW in this example. Both valves 28, 29 are open and both propellers 16a, 16b are operative.

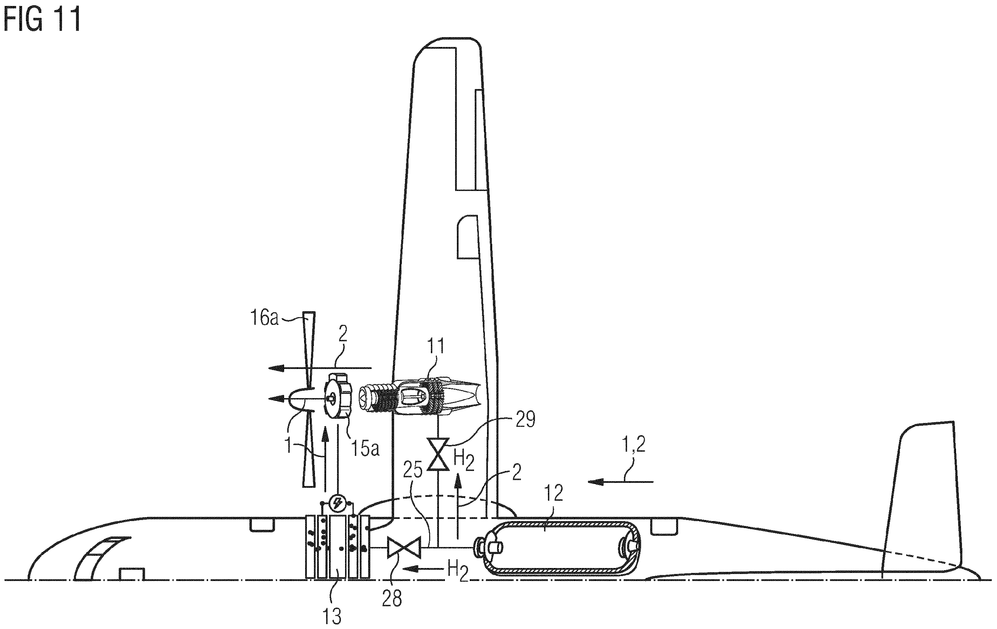

**Figure 11** shows a schematic view of an aircraft 100 equipped with the hybrid propulsion system 10 according to the first embodiment of the invention. In this example, a non-redundant dual-H2 concept architecture is realized.

Depending on the flying phase, the system will either commute to fuel cell propulsion or to H2 burn propulsion. This is achieved by two different flow paths 1 and 2.

Path 1 is activated during at least one of the phases taxiing, take-off, first part of climbing, second part of descent and landing, preferably in all of these phases. The H2 supplied by fuel tank 12 will power the fuel cell 13 only and by consequence electric machine 15a associated therewith. The gas turbine 11 will not be powered. The propulsion system is operated in a way that valve 29 provided in duct 26 is closed while valve 28 provided in duct 25 is open. The fuel cell 13 provides electrical power E to the electric machine 15a which acts as a motor and which is connected to propeller 16a.

Path 2 is activated during the second part of climbing, cruise phase and first part of descent. It can also be activated during the climbing phase, preferably in both of these phases. The H2 supplied by fuel tank 12 will power the gas turbine 11 only and by consequence the propeller 16a. The fuel cell 13 will not be powered. The propulsion system is operated in a way that valve 29 provided in duct 26 is open and valve 28 provided in duct 25 is closed.

Summarized, the invention provides a dual-H2 concept architecture which can be redundant according to particularly preferred embodiments. It combines an H2-burn gas turbine with a fuel cell and at least an electric propulsion unit in a hybrid propulsion system. A fully integrated electric machine (motor/generator) including inverter/controller with inherent safety features can be part of the hybrid propulsion system. In particular, a pitch control management can be provided. In addition, a high power density technology with full redundancy can be implemented.

Further, the hybrid propulsion system may comprise an electric transmission system including e.g. a new cable technology, a voltage compatible with integrated and lightweight power electronics as well as high voltage protection devices.

With respect to control, monitoring and protection, one or more of the features power management (multi-source/multi-consumer), automatic reconfiguration upon failure detection as well as health monitoring can be provided.

With respect to thermal management or cooling system, a fuel cell thermal management, an electric propulsion unit thermal management and/or an H2 tank thermal management can be provided in the hybrid propulsion system.

With respect to aircraft integration, and H2 tank integration with inherent safety features, a distributed propulsion integration and/or a nacelle integration with integrated thermal management can be realised.

### List of reference numbers:

- 1: first path
- 2: second path
- 10, 20: Hybrid propulsion system
- 11: gas turbine
- 12: fuel tank / H2 source
- 13: fuel cell unit
- 13a: anode
- 13b: cathode
- 13c: electrolyte
- 14: electric propulsion unit
- 15a, 15b: electric machine
- 16a, 16b: propeller
- 17a: fuel input opening
- 17b: oxidant input opening
- 18a: depleted fuel output opening
- 18b: H₂O output opening
- 24: electric propulsion unit
- 25, 26: ducts
- 27: Power control unit
- 28, 29: valves
- 30, 31: electric lines
- 33a, 33b: shafts
- 100: aircraft

- E: electrical power
- H2: hydrogen flow
- M1: first operational/propulsion mode
- M2: second operational/propulsion mode
- O2: oxidant/oxygen flow
- Pm: mechanical power

## Claims

1. Hybrid propulsion system (10, 20) for aircraft, comprising
at least a fuel cell unit (13) for providing power to drive an aircraft (100) by using hydrogen in a redox reaction;
at least a gas turbine (11) for providing power to drive the aircraft (100) by burning hydrogen;
a hydrogen source (12) for providing the hydrogen to the fuel cell unit (13) and/or to the gas turbine (11); and at least
an electric propulsion unit (14, 24) for driving the aircraft (100), the electric propulsion unit (14, 24) comprising a first electric machine (15a, 15b) connected to a first propeller (16a, 16b), the first electric machine being electrically powered by the fuel cell unit (13) and mechanically powered by the gas turbine (11) in at least two different propulsion modes (M1, M2); and
a control unit (27) to control the power supply to the electric propulsion unit (14, 24),
wherein the control unit (27) is configured to apply a first propulsion mode (M1) for a first flight phase in which the electric propulsion unit (14, 24) is essentially or only electrically powered by the fuel cell unit (13), and to apply a second propulsion mode (M2) for a second flight phase in which the electric propulsion unit (14, 24) is essentially or only mechanically powered by the gas turbine (11).

2. Hybrid propulsion system according to claim 1, **characterized in that** the control unit (27) is configured to apply the first propulsion mode (M1) in one or more of the flight phases taxiing, take-off, first part of climbing, second part of descent and landing.

3. Hybrid propulsion system according to claim 1 or 2, **characterized in that** the control unit (27) is configured to apply the second propulsion mode (M2) in one or more of the flight phases second part of climbing, cruise and first part of descent.

4. Hybrid propulsion system according to one of the preceding claims, wherein the electric propulsion unit (24) comprises a second electric machine (15b) driving a second propeller (16b), wherein the fuel cell unit (13) is adapted to provide electrical power to the first electric machine (15a) and/or to the second electric machine (15b), and wherein the gas turbine (11) is adapted to provide mechanical power at least to the first electric machine (15a) and to the first propeller (16a) via a common shaft.

5. Hybrid propulsion system according to claim 4, **characterized in that** the first electric machine (15a) is adapted to convert the mechanical power provided by the gas turbine (11) into electrical power, and to provide the electrical power to the second electric machine (15b).

6. Hybrid propulsion system according to one of the preceding claims, **characterized in that** the control unit (27) comprises a failure control for automatically changing from one to the other propulsion mode (M1, M2) in case of failure of an element of the propulsion chain, including at least
6.1. a failure of the fuel cell unit (13), and / or
6.2. a failure of an electric connection for delivering electrical power to an electric machine (15a, 15b) of the electric propulsion unit (24), and/or
6.3. a failure of an electric machine (15a, 15b) of the electric propulsion unit (24) and / or
6.4. a failure of the gas turbine (11).

7. Hybrid propulsion system according to claim 6 when depending on claim 4, wherein depending on the type of a failure and the currently activated propulsion mode, the control unit (27) is configured to activate at least
7.1. a flow of hydrogen to the fuel cell unit (13) and/or to the gas turbine (11), and/or
7.2. a flow of electrical power produced by the fuel cell unit (13) and/or a flow of mechanical power produced by the gas turbine (11) to both electric machines (15a, 15b) or to only one of the electric machines (15a, 15b).

8. Method of operating a hybrid propulsion system of an aircraft, the hybrid propulsion system comprising an electric propulsion unit (14, 24) which comprises a first electric machine (15a, 15b) connected to a first propeller (16a, 16b) and a gas turbine (11),
the method comprising the steps of providing hydrogen to a fuel cell unit (13) and/or to the gas turbine (11);
providing power to drive the electric propulsion unit (14, 24) of the aircraft (100) in a first propulsion mode (M1) by using the hydrogen for a redox reaction in the fuel cell unit (13),;
providing power to mechanically drive the electric propulsion unit (14, 24) of the aircraft (100) in a second propulsion mode (M2) by burning the hydrogen in the gas turbine (11);
wherein in a first flight phase the first propulsion mode (M1) is essentially or only used, and in a second flight phase the second propulsion mode (M2) is essentially or only used.

9. Method according to claim 8, **characterized in that**
9.1. the first propulsion mode (M1) is applied in one or more of the flight phases taxiing, take-off, first part of climbing, second part of descent and landing; and/ or
9.2. the second propulsion mode (M2) is applied in one or more of the flight phases second part of climbing, cruise and first part of descent.

10. Method according to claim 8 or 9, **characterized in that** depending on a type of a failure and the currently activated propulsion mode
10.1. a flow of hydrogen to the fuel cell unit (13) and/or to the gas turbine (11) is activated, and/or
10.2. a flow of electrical power from the fuel cell (13) and/or a flow of mechanical power from the gas turbine (11) to the first electric machine (15a) and/or to a second electric machine (15b) of the electric propulsion unit (14, 24) connected to a second propeller (16b) is activated.

11. Method according to one of claims 8 to 10, **characterized in that** in the first propulsion mode (M1) the fuel cell unit (13) provides electrical power to the first electric machine (15a) for driving the first propeller (16a) and/or to the second electric machine (15b) of the electric propulsion unit (14, 24) for driving the second propeller (16b), and in the second propulsion mode (M2) the gas turbine (11) provides mechanical power at least to the first electric machine (15a) for driving the first propeller (16a).

12. Method according to one of claims 8 to 11, **characterized in that** in the second propulsion mode (M2) the gas turbine (11) provides mechanical power to the first electric machine (15a) which provides electrical power to the second electric machine (15b) for driving another propeller (16a, 16b).

13. Method according to one of claims 8 to 12, **characterized by** a failure operation in which the current propulsion mode is replaced by the other propulsion mode in case of a failure of an element of the propulsion chain, including at least
13.1. a failure of the fuel cell unit (13), and / or
13.2. a failure of an electric connection delivering electrical power to the electric machine (15a, 15b) for driving the propeller (16a, 16b), and/or
13.3. a failure of the electric machine (15a, 15b) of the electric propulsion unit (24) for driving the aircraft (100) and/or
13.4. failure of the gas turbine (11)

14. Method according to one of claims 8 to 14, **characterized by** using a hybrid propulsion system according to one of claims 1 to 7.

15. Hybrid Aircraft (100), comprising a hybrid propulsion system according to one of claims 1 to 7.

## Patentansprüche

1. Hybridantriebssystem (10, 20) für Luftfahrzeuge, umfassend mindestens eine Brennstoffzelleneinheit (13) zum Bereitstellen von Leistung zum Antreiben eines Luftfahrzeugs (100) durch Verwenden von Wasserstoff in einer Redoxreaktion;
mindestens eine Gasturbine (11) zum Bereitstellen von Leistung zum Antreiben des Luftfahrzeugs (100) durch Verbrennen von Wasserstoff;
eine Wasserstoffquelle (12) zum Bereitstellen des Wasserstoffs zu der Brennstoffzelleneinheit (13) und/oder zu der Gasturbine (11); und zumindest
eine elektrische Antriebseinheit (14, 24) zum Antreiben des Luftfahrzeugs (100), wobei die elektrische Antriebseinheit (14, 24) eine erste elektrische Maschine (15a, 15b) umfasst, die mit einem ersten Propeller (16a, 16b) verbunden ist, wobei die erste elektrische Maschine in mindestens zwei verschiedenen Antriebsmodi (M1, M2) elektrisch durch die Brennstoffzelleneinheit (13) angetrieben und mechanisch durch die Gasturbine (11) angetrieben wird; und
eine Steuereinheit (27) zum Steuern der Leistungsversorgung der elektrischen Antriebseinheit (14, 24),
wobei die Steuereinheit (27) dazu ausgelegt ist, einen ersten Antriebsmodus (M1) für eine erste Flugphase anzuwenden, in der die elektrische Antriebseinheit (14, 24) im Wesentlichen oder ausschließlich elektrisch durch die Brennstoffzelleneinheit (13) angetrieben wird, und
einen zweiten Antriebsmodus (M2) für eine zweite Flugphase anzuwenden, in der die elektrische Antriebseinheit (14, 24) im Wesentlichen oder ausschließlich mechanisch durch die Gasturbine (11) angetrieben wird.

2. Hybridantriebssystem nach Anspruch 1, **dadurch gekennzeichnet, dass** die Steuereinheit (27) dazu ausgelegt ist, den ersten Antriebsmodus (M1) in einer oder mehreren der Flugphasen Rollen, Abheben, erster Teil eines Steigflugs, zweiter Teil eines Sinkflugs und Landen anzuwenden.

3. Hybridantriebssystem nach Anspruch 1 oder 2, **dadurch gekennzeichnet, dass** die Steuereinheit (27) dazu ausgelegt ist, den zweiten Antriebsmodus (M2) in einer oder mehreren der Flugphasen zweiter Teil eines Steigflugs, Fliegen mit Reisegeschwindigkeit und erster Teil eines Sinkflugs anzuwenden.

4. Hybridantriebssystem nach einem der vorhergehenden Ansprüche, wobei die elektrische Antriebseinheit (24) eine zweite elektrische Maschine (15b) umfasst, die einen zweiten Propeller (16b) antreibt, wobei die Brennstoffzelleneinheit (13) dazu ausgelegt ist, elektrische Leistung zu der ersten elektrischen Maschine (15a) und/oder zu der zweiten elektrischen Maschine (15b) bereitzustellen, und wobei die Gasturbine (11) dazu ausgelegt ist, über eine gemeinsame Welle mechanische Leistung zumindest zu der ersten elektrischen Maschine (15a) und zu dem ersten Propeller (16a) bereitzustellen.

5. Hybridantriebssystem nach Anspruch 4, **dadurch gekennzeichnet, dass** die erste elektrische Maschine (15a) dazu ausgelegt ist, die durch die Gasturbine (11) bereitgestellte mechanische Leistung in elektrische Leistung umzuwandeln und die elektrische Leistung zu der zweiten elektrischen Maschine (15b) bereitzustellen.

6. Hybridantriebssystem nach einem der vorhergehenden Ansprüche, **dadurch gekennzeichnet, dass** die Steuereinheit (27) eine Ausfallsteuerung zum automatischen Wechseln von einem in den anderen Antriebsmodus (M1, M2) bei Ausfall eines Elements des Antriebsstrangs umfasst, einschließlich zumindest
6.1. einem Ausfall der Brennstoffzelleneinheit (13), und/oder
6.2. einem Ausfall einer elektrischen Verbindung zum Liefern von elektrischer Leistung zu einer elektrischen Maschine (15a, 15b) der elektrischen Antriebseinheit (24), und/oder
6.3. einem Ausfall einer elektrischen Maschine (15a, 15b) der elektrischen Antriebseinheit (24) und/oder
6.4. einem Ausfall der Gasturbine (11).

7. Hybridantriebssystem nach Anspruch 6, wenn abhängig von Anspruch 4, wobei die Steuereinheit (27) in Abhängigkeit von der Art eines Ausfalls und dem aktuell aktivierten Antriebsmodus dazu ausgelegt ist, zumindest Folgendes zu aktivieren
7.1. einen Strom von Wasserstoff zu der Brennstoffzelleneinheit (13) und/oder zu der Gasturbine (11), und/oder
7.2. einen Strom von durch die Brennstoffzelleneinheit (13) erzeugter elektrischer Leistung und/oder einen Strom von durch die Gasturbine (11) erzeugter mechanischer Leistung zu beiden elektrischen Maschinen (15a, 15b) oder zu nur einer der elektrischen Maschinen (15a, 15b).

8. Verfahren zum Betreiben eines Hybridantriebssystems eines Luftfahrzeugs, wobei das Hybridantriebssystem eine elektrische Antriebseinheit (14, 24), die eine erste elektrische Maschine (15a, 15b) umfasst, die mit einem ersten Propeller (16a, 16b) verbunden ist, und eine Gasturbine (11) umfasst, wobei das Verfahren die folgenden Schritte umfasst Bereitstellen von Wasserstoff zu einer Brennstoffzelleneinheit (13) und/oder zu der Gasturbine (11);
Bereitstellen von Leistung zum Antreiben der elektrischen Antriebseinheit (14, 24) des Luftfahrzeugs (100) in einem ersten Antriebsmodus (M1) durch Verwenden des Wasserstoffs für eine Redoxreaktion in der Brennstoffzelleneinheit (13);
Bereitstellen von Leistung zum mechanischen Antreiben der elektrischen Antriebseinheit (14, 24) des Luftfahrzeugs (100) in einem zweiten Antriebsmodus (M2) durch Verbrennen des Wasserstoffs in der Gasturbine (11);
wobei in einer ersten Flugphase im Wesentlichen oder ausschließlich der erste Antriebsmodus (M1) verwendet wird und in einer zweiten Flugphase im Wesentlichen oder ausschließlich der zweite Antriebsmodus (M2) verwendet wird.

9. Verfahren nach Anspruch 8, **dadurch gekennzeichnet, dass**
9.1. der erste Antriebsmodus (M1) in einer oder mehreren der Flugphasen Rollen, Abheben, erster Teil eines Steigflugs, zweiter Teil eines Sinkflugs und Landen angewendet wird; und/oder
9.2. der zweite Antriebsmodus (M2) in einer oder mehreren der Flugphasen zweiter Teil eines Steigflugs, Fliegen mit Reisegeschwindigkeit und erster Teil eines Sinkflugs angewendet wird.

10. Verfahren nach Anspruch 8 oder 9, **dadurch gekennzeichnet, dass** in Abhängigkeit von einer Art eines Ausfalls und dem aktuell aktivierten Antriebsmodus
10.1. ein Strom von Wasserstoff zu der Brennstoffzelleneinheit (13) und/oder zu der Gasturbine (11) aktiviert wird, und/oder
10.2. ein Strom elektrischer Leistung von der Brennstoffzelle (13) und/oder ein Strom mechanischer Leistung von der Gasturbine (11) zu der ersten elektrischen Maschine (15a) und/oder zu einer zweiten elektrischen Maschine (15b) der elektrischen Antriebseinheit (14, 24), die mit einem zweiten Propeller (16b) verbunden ist, aktiviert wird.

11. Verfahren nach einem der Ansprüche 8 bis 10, **dadurch gekennzeichnet, dass** in dem ersten Antriebsmodus (M1) die Brennstoffzelleneinheit (13) elektrische Leistung zu der ersten elektrischen Maschine (15a) zum Antreiben des ersten Propellers (16a) und/oder zu der zweiten elektrischen Maschine (15b) der elektrischen Antriebseinheit (14, 24) zum Antreiben des zweiten Propellers (16b) bereitstellt, und in dem zweiten Antriebsmodus (M2) die Gasturbine (11) mechanische Leistung zumindest zu der ersten elektrischen Maschine (15a) zum Antreiben des ersten Propellers (16a) bereitstellt.

12. Verfahren nach einem der Ansprüche 8 bis 11, **dadurch gekennzeichnet, dass** in dem zweiten Antriebsmodus (M2) die Gasturbine (11) mechanische Leistung zu der ersten elektrischen Maschine (15a) bereitstellt, die elektrische Leistung zu der zweiten elektrischen Maschine (15b) zum Antreiben eines anderen Propellers (16a, 16b) bereitstellt.

13. Verfahren nach einem der Ansprüche 8 bis 12, **gekennzeichnet durch** einen Ausfallbetrieb, bei dem der aktuelle Antriebsmodus durch den anderen Antriebsmodus bei Ausfall eines Elements des Antriebsstrangs ersetzt wird, einschließlich zumindest
13.1. einem Ausfall der Brennstoffzelleneinheit (13), und/oder
13.2. einem Ausfall einer elektrischen Verbindung, die elektrische Leistung zu der elektrischen Maschine (15a, 15b) zum Antreiben des Propellers (16a, 16b) liefert, und/oder
13.3. einem Ausfall der elektrischen Maschine (15a, 15b) der elektrischen Antriebseinheit (24) zum Antreiben des Luftfahrzeugs (100) und/oder
13.4. einem Ausfall der Gasturbine (11)

14. Verfahren nach einem der Ansprüche 8 bis 14, **gekennzeichnet durch** Verwenden eines Hybridantriebssystems nach einem der Ansprüche 1 bis 7.

15. Hybrides Luftfahrzeug (100), das ein Hybridantriebssystem nach einem der Ansprüche 1 bis 7 umfasst.

## Revendications

1. Système de propulsion hybride (10, 20) pour aéronef, comprenant au moins une unité de pile à combustible (13) pour fournir de l'énergie pour entraîner un aéronef (100) en utilisant de l'hydrogène dans une réaction d'oxydoréduction ;
au moins une turbine à gaz (11) pour fournir de l'énergie pour entraîner l'aéronef (100) en brûlant de l'hydrogène ;
une source d'hydrogène (12) pour fournir l'hydrogène à l'unité de pile à combustible (13) et/ou à la turbine à gaz (11) ; et au moins
une unité de propulsion électrique (14, 24) destinée à entraîner l'aéronef (100), l'unité de propulsion électrique (14, 24) comprenant une première machine électrique (15a, 15b) connectée à une première hélice (16a, 16b), la première machine électrique étant alimentée électriquement par l'unité de pile à combustible (13) et alimentée mécaniquement par la turbine à gaz (11) dans au moins deux modes de propulsion différents (M1, M2) ; et
une unité de commande (27) pour commander l'alimentation électrique à l'unité de propulsion électrique (14, 24), dans lequel l'unité de commande (27) est configurée pour appliquer un premier mode de propulsion (M1) pour une première phase de vol dans laquelle l'unité de propulsion électrique (14, 24) est essentiellement ou seulement alimentée électriquement par l'unité de pile à combustible (13), et pour appliquer un second mode de propulsion (M2) pour une seconde phase de vol dans laquelle l'unité de propulsion électrique (14, 24) est essentiellement ou seulement alimentée mécaniquement par la turbine à gaz (11).

2. Système de propulsion hybride selon la revendication 1, **caractérisé en ce que** l'unité de commande (27) est configurée pour appliquer le premier mode de propulsion (M1) dans une ou plusieurs des phases de vol circulation au sol, décollage, première partie de montée, seconde partie de descente et atterrissage.

3. Système de propulsion hybride selon la revendication 1 ou 2, **caractérisé en ce que** l'unité de commande (27) est configurée pour appliquer le second mode de propulsion (M2) dans une ou plusieurs des phases de vol seconde partie de montée, croisière et première partie de descente.

4. Système de propulsion hybride selon l'une des revendication précédente, dans lequel l'unité de propulsion électrique (24) comprend une seconde machine électrique (15b) entraînant une seconde hélice (16b), dans lequel l'unité de pile à combustible (13) est adaptée pour fournir de l'énergie électrique à la première machine électrique (15a) et/ou à la seconde machine électrique (15b), et dans lequel la turbine à gaz (11) est adaptée pour fournir de l'énergie mécanique au moins à la première machine électrique (15a) et à la première hélice (16a) par l'intermédiaire d'un arbre commun.

5. Système de propulsion hybride selon la revendication 4, **caractérisé en ce que** la première machine électrique (15a) est adaptée pour convertir l'énergie mécanique fournie par la turbine à gaz (11) en énergie électrique, et pour fournir l'énergie électrique à la seconde machine électrique (15b).

6. Système de propulsion hybride selon l'une des revendication précédente, **caractérisé en ce que** l'unité de commande (27) comprend une commande en cas de défaillance pour changer automatiquement d'un à l'autre mode de propulsion (M1, M2) en cas de défaillance d'un élément de la chaîne de propulsion, incluant au moins
6.1. une défaillance de l'unité de pile à combustible (13), et/ou
6.2. une défaillance d'une connexion électrique pour distribuer de l'énergie électrique à une machine électrique (15a, 15b) de l'unité de propulsion électrique (24), et/ou
6.3. une défaillance d'une machine électrique (15a, 15b) de l'unité de propulsion électrique (24) et/ou
6.4. une défaillance de la turbine à gaz (11).

7. Système de propulsion hybride selon la revendication 6 lorsqu'elle dépend de la revendication 4, dans lequel, en fonction du type d'une défaillance et du mode de propulsion actuellement activé, l'unité de commande (27) est configurée pour activer au moins
7.1. un flux de hydrogène à l'unité de pile à combustible (13) et/ou à la turbine à gaz (11), et/ou
7.2. un flux d'énergie électrique produit par l'unité de pile à combustible (13) et/ou un flux d'énergie mécanique produit par la turbine à gaz (11) aux deux machines électriques (15a, 15b) ou à seulement une des machines électriques (15a, 15b).

8. Procédé de fonctionnement d'un système de propulsion hybride d'un aéronef, le système de propulsion hybride comprenant une unité de propulsion électrique (14, 24) qui comprend une première machine électrique (15a, 15b) connectée à une première hélice (16a, 16b) et une turbine à gaz (11), le procédé comprenant les étapes de la fourniture d'hydrogène à une unité de pile à combustible (13) et/ou à la turbine à gaz (11) ;
la fourniture d'énergie pour entraîner l'unité de propulsion électrique (14, 24) de l'aéronef (100) dans un premier mode de propulsion (M1) en utilisant l'hydrogène pour une réaction d'oxydoréduction dans l'unité de pile à combustible (13) ;
la fourniture d'énergie pour entraîner mécaniquement l'unité de propulsion électrique (14, 24) de l'aéronef (100) dans un second mode de propulsion (M2) en brûlant l'hydrogène dans la turbine à gaz (11) ;
dans lequel, dans une première phase de vol, le premier mode de propulsion (M1) est essentiellement ou seulement utilisé, et, dans une seconde phase de vol, le second mode de propulsion (M2) est essentiellement ou seulement utilisé.

9. Procédé selon la revendication 8, **caractérisé en ce que**
9.1. le premier mode de propulsion (M1) est appliqué dans une ou plusieurs des phases de vol circulation au sol, décollage, première partie de montée, seconde partie de descente et atterrissage ; et/ou
9.2. le second mode de propulsion (M2) est appliqué dans une ou plusieurs des phases de vol seconde partie de montée, croisière et première partie de descente.

10. Procédé selon la revendication 8 ou 9, **caractérisé en ce que**, en fonction d'un type d'une défaillance et du mode de propulsion actuellement activé,
10.1. un flux d'hydrogène à l'unité de pile à combustible (13) et/ou à la turbine à gaz (11) est activé, et/ou
10.2. un flux d'énergie électrique depuis la pile à combustible (13) et/ou un flux d'énergie mécanique depuis la turbine à gaz (11) à la première machine électrique (15a) et/ou à une seconde machine électrique (15b) de l'unité de propulsion électrique (14, 24) connectée à une seconde hélice (16b) est activé.

11. Procédé selon l'une des revendications 8 à 10, **caractérisé en ce que**, dans le premier mode de propulsion (M1), l'unité de pile à combustible (13) fournit de l'énergie électrique à la première machine électrique (15a) pour entraîner la première hélice (16a) et/ou à la seconde machine électrique (15b) de l'unité de propulsion électrique (14, 24) pour entraîner la seconde hélice (16b), et, dans le second mode de propulsion (M2), la turbine à gaz (11) fournit de l'énergie mécanique au moins à la première machine électrique (15a) pour entraîner la première hélice (16a).

12. Procédé selon l'une des revendications 8 à 11, **caractérisé en ce que**, dans le second mode de propulsion (M2), la turbine à gaz (11) fournit de l'énergie mécanique à la première machine électrique (15a) qui fournit de l'énergie électrique à la seconde machine électrique (15b) pour entraîner une autre hélice (16a, 16b).

13. Procédé selon l'une des revendications 8 à 12, **caractérisé par** une opération en cas de défaillance dans laquelle le mode de propulsion actuel est remplacé par l'autre mode de propulsion en cas d'une défaillance d'un élément de la chaîne de propulsion, incluant au moins
13.1. une défaillance de l'unité de pile à combustible (13), et/ou
13.2. une défaillance d'une connexion électrique distribuant de l'énergie électrique à la machine électrique (15a, 15b) pour entraîner l'hélice (16a, 16b), et/ou
13.3. une défaillance de la machine électrique (15a, 15b) de l'unité de propulsion électrique (24) pour entraîner l'aéronef (100), et/ou
13.4. une défaillance de la turbine à gaz (11).

14. Procédé selon l'une des revendications 8 à 14, **caractérisé par** l'utilisation d'un système de propulsion hybride selon l'une des revendications 1 à 7.

15. Aéronef hybride (100), comprenant un système de propulsion hybride selon l'une des revendications 1 à 7.
